# EUROPEAN PATENT APPLICATION

(11) **EP 4 616 716 A1**
(43) Date of publication of application: **17.09.2025**
(21) Application number: 23814233.5
(22) Date of filing: 31.10.2023
(51) Int. Cl.: A23B 5/00, A23B 5/02, A23J 3/04, A23L 15/00

(54) **PROCESS OF A PROTEIN POWDER**

(30) Priority: 08.11.2022 ES 202230961
(71) Applicant: Eggnovo S.L., 31132 Villatuerta (Navarra) (ES)
(72) Inventor: AGUIRRE GONZALEZ, Andrés, 31132 Villatuerta (Navarra) (ES); GIL-QUINTANA, Erena, 31132 Villatuerta (Navarra) (ES)
(74) Representative: Maslanka Kubik, Dorota Irena
(86) International application number: PCT/ES2023/070642
(87) International publication number: WO 2024/100312

(57) **Abstract**

The present invention relates to a method for the treatment of protein materials with a low water activity which comprises providing a powdered protein material; vacuum packaging the powdered protein material; compacting the vacuum-packaged powdered protein material by means of high hydrostatic pressure processing (HPP); and finally crushing and milling the thus compacted protein material.

## Description

### Field of the Invention

The present invention generally relates to the field of protein material processing, and more specifically to powdered protein material compaction.

### Background of the Invention

High hydrostatic pressure processing (HPP) is an emerging technique which is used as a non-thermal alternative to pasteurization for the purpose of deactivating food pathogens, and allows increasing food safety, increasing service life, and reducing or eliminating the use of preservatives. HPP processing is suitable for application on liquid or solid products with a high water activity (AW). However, it is not suitable for the case of materials with a low water activity.

Protein materials are frequently used as food supplements or pharmaceutical products with properties suitable for improving consumers health and quality of life. In these cases, the protein materials are usually presented in the form of capsules containing therein the material or a combination of powdered protein materials, possibly together with other food or pharmaceutical components. It is known in the art that it is desirable to use capsules having the smallest possible size given that acceptance by consumers is thus generally improved, and furthermore it may even be indispensable in the case of consumers with swallowing difficulties for whom it may be difficult or even impossible to swallow capsules above a certain size. To that end, it is desirable to use methods for compacting protein materials such that they can be introduced into capsules of a smaller size. Another benefit of compacting the protein materials is that it may allow combining several components in a single capsule of a smaller size instead of using a capsule of a larger size or even two or more capsules.

Therefore, it would be desirable to have a method which allows, in addition to sterilizing, compacting raw protein materials (i.e., increasing their density), specifically raw protein materials with a low water activity.

### Summary of the Invention

In view of the state of the art described above, the present invention proposes a method for treatment which allows applying a high hydrostatic pressure processing (HPP) step on protein materials with a low water activity for the purpose of increasing the density thereof, as a result of the combination thereof with preparation steps prior to the HPP step and with subsequent processing steps. Specifically, the present invention discloses a method for the treatment of powdered protein materials with a low water activity which comprises:
- providing a powdered protein material;
- vacuum packaging the powdered protein material;
- compacting the vacuum-packaged powdered protein material by means of high hydrostatic pressure processing (HPP);
- crushing and milling the thus compacted protein material;
whereby an increase in the density of the protein material is obtained.

### Detailed Description of the Preferred Embodiments

As commented above, the HPP technique is commonly used in liquid or solid products with a high water activity but is not suitable in the case of products with a low water activity (for example, with moisture below 8% and water activity below 0.400), such as powdered protein materials of different natures which are used as food supplements or pharmaceutical products.

However, the present inventors have carried out a series of studies and have demonstrated that, by means of a series of prior (preparation) and subsequent steps, the HPP technique can be adapted so that it can be used in this type of protein materials with a low water activity. In this way, an increase in the density of the protein material can be achieved, in addition to sterilization for which the HPP treatment is commonly used. This increase in the density of the protein material in turn entails advantages related with its presentation in capsules of a smaller size, as commented herein above.

It has been discovered that the step of compacting the vacuum-packaged powdered protein material by means of HPP can be performed at a pressure of at least 150 bar, preferably of at least 500 bar, and particularly at a pressure from 150 to 6000 bar, and for a time of at least 1 minute, preferably of at least 2 minutes, and particularly for a time of between 2 and 5 minutes.

### Examples

Several examples of the method for the treatment of protein materials disclosed herein are described below.

In the examples that have been carried out, eggshell membrane was used as powdered raw protein material. First, several initial tests for the treatment of 5-kg bags of raw material were performed by means of HPP. However, the HPP machine used was not capable of processing said samples. After several tests, it was found that failure to operate the HPP machine was due to the presence of air in the samples, so a prior step of vacuum packaging the powdered protein material before the treatment thereof by means of HPP was performed.

Indeed, the resulting product after the application of HPP is a "brick"-like block. To convert the block back to powder, it must be removed from the bags, crushed, and then milled. As will be commented below, different technologies were used for crushing the blocks including, among others, the use of a press, guillotine, even food saws. Blade, hammer, and ball mills were used for the subsequent milling, with the increases in density being maintained with respect to the starting density in all cases.

Tests corresponding with other powdered protein materials of different natures were also performed.

### Example 1

Egg membrane samples were vacuum packaged, and heat sealed in 5-kg bags. The parameters of the HPP machine were as follows: 5 minutes with a pressure of 6000 bar (600 Mpa). Upon analyzing the processed product, it was observed that some bags contained water therein. Upon analyzing said bags, the presence of pores was observed in the heat-sealing line, so it was decided to use double bagging for subsequent tests.

The blocks located inside bags that did not contain water were taken out of the bags and crushed for subsequent milling in a blade mill, obtaining the following results, in which it was observed that the final density increased by 50% with respect to the initial density.

| | Before HPP | After HPP |
|---|---|---|
| Density (g/cm³) | 0.283 | 0.425 |
| Mesophilic aerobes | 2.8 E⁴ cfu/g | <1.0 E³ cfu/g |
| *Escherichia coli* | < 40 cfu/g | Absence in 1 g |
| *Salmonella* | Absence in 25 g | Absence in 25 g |

### Example 2

Egg membrane samples were vacuum packaged, and heat sealed by means of double bagging in 5-kg bags. The parameters of the HPP machine were as follows: 5 minutes with a pressure of 6000 bar (600 Mpa). Upon analyzing the processed product, it was observed that some samples contained water between the inner bag and the outer bag. The blocks located inside bags that did not contain water were taken out of the bags and crushed for subsequent milling in a hammer mill, obtaining the following results, in which it was observed that the final density increased by 44.5% with respect to the initial density.

| | Before HPP | After HPP |
|---|---|---|
| Density (g/cm³) | 0.303 | 0.438 |
| Mesophilic aerobes | 3.1 E⁵ cfu/g | <1.0 E³ cfu/g |
| *Escherichia coli* | < 10 cfu/g | Absence in 1 g |
| *Salmonella* | Absence in 25 g | Absence in 25 g |

### Example 3

Egg membrane samples were vacuum packaged, and heat sealed in 5-kg embossed bags. The embossed material has a fluted texture, with small holes that imitate a beehive, this material allows, upon suctioning air from the bags during vacuum processing, the powder entrained by the vacuum pressure to be retained in the embossed lattice and not to reach the higher area where heat sealing will subsequently be applied. In this way, the area to be heat sealed is completely clean, and therefore can be hermetically closed.

The parameters of the HPP machine were as follows: 5 minutes with a pressure of 6000 bar (600 Mpa). Upon analyzing the processed product, it was observed that there were no bags with water or wet product. The blocks were taken out of the embossed bags and crushed for subsequent milling in a ball mill, obtaining the following results, in which it was observed that the final density increased by 42% with respect to the initial density.

| | Before HPP | After HPP |
|---|---|---|
| Density (g/cm³) | 0.290 | 0.412 |
| Mesophilic aerobes | 7.6 E⁴ cfu/g | <1.0 E³ cfu/g |
| *Escherichia coli* | Absence | Absence in 1 g |
| *Salmonella* | Absence in 25 g | Absence in 25 g |

### Example 4

Egg membrane samples were vacuum packaged, and heat sealed in 5-kg embossed bags. The parameters of the HPP machine were as follows: 5 minutes with a pressure of 6000 bar (600 Mpa). Upon analyzing the processed product, it was observed that there were no bags with water or wet product. The blocks were taken out of the embossed bags and crushed for subsequent milling in a hammer mill, obtaining the following results, in which it was observed that the final density increased by 42% with respect to the initial density.

| | Before HPP | After HPP |
|---|---|---|
| Density (g/cm³) | 0.264 | 0.375 |
| Mesophilic aerobes | 4.9 E⁵ cfu /g | <1.0 E² cfu/g |
| *Escherichia coli* | < 40 cfu /g | Absence in 1 g |
| *Salmonella* | Absence in 25 g | Absence in 25 g |

### Example 5

Egg membrane samples were vacuum packaged, and heat sealed in 5-kg embossed bags. The parameters of the HPP machine were as follows: 5 minutes with a pressure of 6000 bar (600 Mpa). Upon analyzing the processed product, it was observed that there were no bags with water or wet product. The blocks were taken out of the embossed bags and crushed for subsequent milling in a blade mill, obtaining the following results, in which it was observed that the final density increased by 35.5% with respect to the initial density.

| | Before HPP | After HPP |
|---|---|---|
| Density (g/cm³) | 0.310 | 0.420 |
| Mesophilic aerobes | 2.1 E² cfu/g | <1.0 E² cfu/g |
| *Escherichia coli* | Absence cfu/g | Absence in 1 g |
| *Salmonella* | Absence in 25 g | Absence in 25 g |

### Example 6

Egg membrane samples were vacuum packaged, and heat sealed in 5-kg embossed bags. The parameters of the HPP machine were as follows: 5 minutes with a pressure of 6000 bar (600 Mpa). Upon analyzing the processed product, it was observed that there were no bags with water or wet product. The blocks were taken out of the embossed bags and crushed for subsequent milling in a ball mill, obtaining the following results, in which it was observed that the final density increased by 36.5% with respect to the initial density.

| | Before HPP | After HPP |
|---|---|---|
| Density (g/cm³) | 0.321 | 0.438 |
| Mesophilic aerobes | 5.5 E⁵ cfu/g | <1.0 E² cfu/g |
| *Escherichia coli* | < 10 cfu /g | Absence in 1 g |
| *Salmonella* | Absence in 25 g | Absence in 25 g |

The following table summarizes the results of the preceding examples, taking as the only variable the type of mill used for the second milling, i.e., for transforming the block obtained after applying HPP treatment on the egg membrane:

| Type of mill | Example | | | | | |
|---|---|---|---|---|---|---|
| | 1 | 2 | 3 | 4 | 5 | 6 |
| Hammer | 50% | - | - | 42% | - | - |
| Blade | - | 44.5% | - | - | 35.5% | - |
| Ball | - | - | 42.0% | - | - | 36.5% |

Based on the preceding examples, it can be concluded that the HPP step can be used to increase the density of powdered solid substances with a very low AW, between 35-50% with respect to the density of the initial product, provided that vacuum packaging of the powdered product, preferably by means of double bagging and/or by means of using embossed bags, is performed as treatment prior to HPP treatment. Once the vacuum-packaged powdered protein material is compacted by means of a HPP step, it will be removed from the bag, the product obtained will be crushed (for example, by means of pressing, applying a guillotine or saw), and then milled using a mill from the group consisting of a hammer mill, a blade mill, and a ball mill.

### Example 7

The behavior of different powdered protein materials with respect to the application of the method according to the present invention is studied in this example.

Powdered protein materials of different natures were obtained, subjected to the preparative treatments described in the preceding examples, a HPP treatment consisting of the application of 6000 bar for 5 minutes was performed, and the thus compacted protein materials were then milled to transform them into powder using any type of mill described in the preceding examples, preferably a hammer mill. The density of the starting protein material and of the final compacted protein material was measured and the increase in density expressed in % was calculated.

| MATERIAL | NATURE | INCREASE IN DENSITY, % |
|---|---|---|
| Eggshell | 98% mineral | 0 |
| Powdered egg | 50% protein, 50% fat | 0 |
| Egg white | 82% protein | 18 |
| Egg membrane (Ovomet^{®}) | 95% protein | 35 |
| Keratin | 98% protein | 749 |
| Casein | 95% protein | 60 |
| Pea protein | 90% protein | 21 |
| Whey protein | 82% protein | 19 |

Based on the preceding table, it can be observed that products of protein nature are more prone to increase in density after the application of a HPP treatment as described above.

### Example 8

Various pressure and time conditions for the HPP step with different powdered protein materials were analyzed in the present example. The results are summarized in the following table. The value shown is the increase in density between the initial powdered protein material and the final compacted protein material.

| | | | | | | | |
|---|---|---|---|---|---|---|---|
| Pressure (bars) | 6000 | 4000 | 2000 | 500 | 200 | 150 | 6000 |
| Time (minutes) | 5 | 5 | 5 | 5 | 5 | 5 | 2 |
| Egg white | 18 | 9 | 12 | 5 | No | No | 16 |
| Egg membrane (Ovomet^{®}) | 35 | 35 | 38 | 22 | 11 | 12 | 33 |
| Keratin | 749 | 644 | 601 | 383 | 207 | 194 | 675 |
| Casein | 59 | 63 | 55 | 33 | 6 | 7 | 63 |
| Pea protein | 21 | 21 | 21 | 11 | No | No | 12 |
| Whey protein | 19 | 16 | 16 | 3 | No | No | 27 |

Based on the preceding results, it can be concluded that an increase in the density of powdered products of protein nature can be achieved after the application of a HPP step from 500 bar (even from 150 bar) and to 6000 bar for 5 minutes, following all the steps before and after the HPP step according to the method described herein. It can also be stated based on the preceding step that an increase in density is already observed with only 2 minutes of treatment by means of HPP.

Having previously described the features of the preferred embodiments of the method according to the present invention in detail, those skilled in the art will be able to apply various modifications and variations to said preferred embodiments without departing from the scope defined by the claims presented below, as well as the technical equivalents thereof.

## Claims

1. A method for the treatment of powdered protein materials which comprises:
- providing a powdered protein material;
- vacuum packaging the powdered protein material;
- compacting the vacuum-packaged powdered protein material by means of high hydrostatic pressure processing (HPP);
- crushing and milling the thus compacted protein material;
whereby an increase in the density of the protein material is obtained.

2. The method according to claim 1, **characterized in that** the step of compacting the vacuum-packaged powdered protein material by means of HPP is performed at a pressure of at least of 150 bar.

3. The method according to claim 2, **characterized in that** the step of compacting the vacuum-packaged powdered protein material by means of HPP is performed at a pressure of at least of 500 bar.

4. The method according to claim 2, **characterized in that** the step of compacting the vacuum-packaged powdered protein material by means of HPP is performed at a pressure from 150 to 6000 bar.

5. The method according to claim 4, **characterized in that** the step of compacting the vacuum-packaged powdered protein material by means of HPP is performed at a pressure from 500 to 6000 bar.

6. The method according to any of the preceding claims, **characterized in that** the step of compacting the vacuum-packaged powdered protein material by means of HPP is performed for a time of at least 1 minute.

7. The method according to any of the preceding claims, **characterized in that** the step of compacting the vacuum-packaged powdered protein material by means of HPP is performed for a time of at least 2 minutes.

8. The method according to any of the preceding claims, **characterized in that** the step of compacting the vacuum-packaged powdered protein material by means of HPP is performed at a pressure from 500 to 6000 bar and for a time of between 2 and 5 minutes.

9. The method according to claim 8, **characterized in that** the step of compacting the vacuum-packaged powdered protein material by means of HPP is performed at a pressure of 6000 bar for 5 minutes.

10. The method according to any of the preceding claims, **characterized in that** the step of milling the compacted protein material is performed by means of a mill selected from the group consisting of a ball mill, a blade mill, and a hammer mill.

11. The method according to any of the preceding claims, **characterized in that** the powdered protein material provided for treatment is selected from the group comprising egg white, egg membrane, keratin, casein, pea protein and whey protein.

12. The method according to claim 11, **characterized in that** the powdered protein material provided for treatment is egg membrane.

13. The method according to any of the preceding claims, **characterized in that** at least one embossed-type bag is used in the step of vacuum packaging the powdered protein material.

## Amended claims

### Amended claims under Art. 19.1 PCT

1. A method for the treatment of powdered protein materials which comprises:
- providing a powdered protein material;
- vacuum packaging the powdered protein material;
- compacting the vacuum-packaged powdered protein material by means of high hydrostatic pressure processing (HPP);
- crushing and milling the thus compacted protein material;
whereby an increase in the density of the protein material is obtained;
wherein the powdered protein material provided for treatment is selected from the group comprising egg white, egg membrane, keratin, casein, pea protein and whey protein.

2. The method according to claim 1, **characterized in that** the step of compacting the vacuum-packaged powdered protein material by means of HPP is performed at a pressure of at least of 150 bar.

3. The method according to claim 2, **characterized in that** the step of compacting the vacuum-packaged powdered protein material by means of HPP is performed at a pressure of at least of 500 bar.

4. The method according to claim 2, **characterized in that** the step of compacting the vacuum-packaged powdered protein material by means of HPP is performed at a pressure from 150 to 6000 bar.

5. The method according to claim 4, **characterized in that** the step of compacting the vacuum-packaged powdered protein material by means of HPP is performed at a pressure from 500 to 6000 bar.

6. The method according to any of the preceding claims, **characterized in that** the step of compacting the vacuum-packaged powdered protein material by means of HPP is performed for a time of at least 1 minute.

7. The method according to any of the preceding claims, **characterized in that** the step of compacting the vacuum-packaged powdered protein material by means of HPP is performed for a time of at least 2 minutes.

8. The method according to any of the preceding claims, **characterized in that** the step of compacting the vacuum-packaged powdered protein material by means of HPP is performed at a pressure from 500 to 6000 bar and for a time of between 2 and 5 minutes.

9. The method according to claim 8, **characterized in that** the step of compacting the vacuum-packaged powdered protein material by means of HPP is performed at a pressure of 6000 bar for 5 minutes.

10. The method according to any of the preceding claims, **characterized in that** the step of milling the compacted protein material is performed by means of a mill selected from the group consisting of a ball mill, a blade mill, and a hammer mill.

11. The method according to claim 1, **characterized in that** the powdered protein material provided for treatment is egg membrane.

12. The method according to any of the preceding claims, **characterized in that** at least one embossed-type bag is used in the step of vacuum packaging the powdered protein material.
